(19) Europäisches Patentamt

European Patent Office

Office européen des brevets

(11) **EP 3 937 408 A1**

(12) # EUROPEAN PATENT APPLICATION
published in accordance with Art. 153(4) EPC

(43) Date of publication:
**12.01.2022 Bulletin 2022/02**

(21) Application number: **20773782.6**

(22) Date of filing: **04.03.2020**

(51) Int Cl.:
*H04L 5/00* (2006.01)     *H04W 72/04* (2009.01)

(86) International application number:
**PCT/CN2020/077830**

(87) International publication number:
**WO 2020/187031 (24.09.2020 Gazette 2020/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.03.2019 CN 201910198301**

(71) Applicant: **Huawei Technologies Co., Ltd.
Shenzhen, Guangdong 518129 (CN)**

(72) Inventor: **YU, Jian
Shenzhen, Guangdong 518129 (CN)**

(74) Representative: **Maiwald Patent- und
Rechtsanwaltsgesellschaft mbH
Elisenhof
Elisenstraße 3
80335 München (DE)**

(54) **DATA TRANSMISSION METHOD AND DEVICE**

(57)     This application discloses a data transmission method and apparatus, and relates to the field of communications technologies. The method includes: A transmit end generates preemption indication information, where the preemption indication information is used to indicate whether a preemption mechanism occurs; and the transmit end sends a PPDU, where the PPDU includes a preamble and a data field, and the data field carries the preemption indication information. In this application, the preemption indication information used to indicate whether the preemption mechanism occurs is carried in the data field of the PPDU, so that a receive end can determine, based on the preemption indication information, whether the preemption mechanism occurs. In this way, transmission of the PPDU can be suspended, and data transmission flexibility is improved.

FIG. 6

EP 3 937 408 A1

## Description

This application claims priority to Chinese Patent Application No. 201910198301.2, filed on March 15, 2019, and entitled "DATA TRANSMISSION METHOD AND APPARATUS", which is incorporated herein by reference in its entirety.

## TECHNICAL FIELD

This application relates to the field of communications technologies, and in particular, to a data transmission method and apparatus.

## BACKGROUND

Each network device in a wireless transmission system obtains a transmission opportunity in a contention manner. For example, a network device in a wireless local area network (wireless local area network, WLAN) contends for a channel by using a backoff mechanism, and transmits a physical layer protocol data unit (Physical Layer Protocol Data Unit, PPDU) on the channel after obtaining the channel through contention. The PPDU includes a preamble (preamble) and a data field (data field). The data field is used to carry a medium access control (medium access control, MAC) protocol data unit (MAC Protocol Data Unit, MPDU) (which may also be referred to as a MAC frame), and the MAC frame includes data, control signaling, management signaling, or the like.

According to an existing WLAN protocol, in a process in which the network device transmits a PPDU with a relatively low service priority on a channel, a PPDU with a relatively high service priority cannot be transmitted. Consequently, a transmission latency of the PPDU with a relatively high service priority is relatively large, and data transmission flexibility is relatively low.

## SUMMARY

This application provides a data transmission method and apparatus, to resolve a problem in a related technology that a transmission latency of a PPDU with a relatively high service priority is relatively large and data transmission flexibility is relatively low. The technical solutions are as follows.

According to a first aspect, a data transmission method is provided, where the method is used for a transmit end, and the method includes:

generating preemption indication information, where the preemption indication information is used to indicate whether a preemption mechanism occurs; and sending a physical layer protocol data unit PPDU, where the PPDU includes a preamble and a data field, and the data field carries the preemption indication information.

According to the data transmission method provided in this application, the preemption indication information used to indicate whether the preemption mechanism occurs is carried in the data field of the PPDU, and when the transmit end needs to stop transmitting a current PPDU, the transmit end may notify, by using preemption indication information, a receive end of suspension of transmitting the current PPDU. This improves data transmission flexibility. In a process in which the transmit end transmits a PPDU, when the transmit end needs to transmit a data frame with a relatively high service priority, transmission of the current PPDU can be suspended, and the data frame with a relatively high service priority can be transmitted in time. Therefore, a transmission latency of the data frame with a relatively high service priority can be reduced.

According to a second aspect, a data transmission method is provided, where the method is used for a receive end, and the method includes:

receiving a PPDU, where the PPDU includes a preamble and a data field, the data field carries preemption indication information, and the preemption indication information is used to indicate whether a preemption mechanism occurs; and parsing the PPDU based on the preemption indication information.

In a first possible implementation of the second aspect, if the preemption indication information indicates that the preemption mechanism occurs, the parsing the PPDU based on the preemption indication information includes: determining a location of a preemption end symbol in the PPDU based on the preemption indication information, where the preemption end symbol is used to indicate a transmission end location of the PPDU.

After determining the location of the preemption end symbol in the PPDU, the receive end may determine the transmission end position of the PPDU based on the location of the preemption end symbol and a quantity of padding symbols indicated by a high throughput control field, so that the receive end quickly generates acknowledgment information of the PPDU.

With reference to the first possible implementation of the second aspect, in a second possible implementation of the second aspect, the preemption end symbol is a last OFDM symbol including a target A-MPDU subframe or a last OFDM symbol including a code block in which a target A-MPDU subframe is located, and the target A-MPDU subframe is a last A-MPDU subframe in the PPDU.

In a first possible implementation of the first aspect and the second aspect, the preamble includes a legacy signal L-SIG field; and if the preemption mechanism occurs, actual transmission duration of the PPDU is less than originally-defined transmission duration indicated by the L-SIG field. In other words, when the preemption mechanism occurs, the actual transmission duration of the PPDU is less than the originally-defined transmission duration indicated by the L-SIG field.

That the preemption mechanism occurs means that a transmit end suspends sending of a current frame. The actual transmission duration of the PPDU is less than the originally-defined transmission duration indicated by the L-SIG field. In other words, a quantity of actually transmitted A-MPDU subframes in the PPDU is less than a quantity of A-MPDU subframes that are originally defined to be transmitted and that are in the PPDU.

In a second possible implementation of the first aspect and the second aspect, the data field includes at least one A-MPDU subframe, and each A-MPDU subframe in the at least one A-MPDU subframe carries the preemption indication information.

With reference to the second possible implementation of the first aspect and the second aspect, in a third possible implementation of the first aspect and the second aspect, if the preemption mechanism occurs, the preemption indication information carried in a last A-MPDU subframe in the at least one A-MPDU subframe indicates that the preemption mechanism occurs.

With reference to the second possible implementation or the third possible implementation of the first aspect and the second aspect, in a fourth possible implementation of the first aspect and the second aspect, the A-MPDU subframe includes an MPDU delimiter and an MPDU; the MPDU delimiter includes at least one of the following fields: an end frame field, a reserved bit field, an MPDU length field, a cyclic redundancy code field, and a delimiter signature field; and the MPDU includes at least one of the following fields: a frame header, a frame body, and a frame check sequence; and

the preemption indication information is located in at least one of the following fields: the end frame field, the reserved bit field, the MPDU length field, the cyclic redundancy code field, the delimiter signature field, a high throughput control field of the frame header, and the frame check sequence.

With reference to the fourth possible implementation of the first aspect and the second aspect, in a fifth possible implementation of the first aspect and the second aspect, the preemption indication information is located in the reserved bit field; and if the reserved bit field is set to a first value, it indicates that the preemption mechanism occurs; or if the reserved bit field is set to a second value, it indicates that the preemption mechanism does not occur, where the second value is different from the first value.

With reference to the fourth possible implementation of the first aspect and the second aspect, in a sixth possible implementation of the first aspect and the second aspect, the preemption indication information is located in the cyclic redundancy code field; and if the cyclic redundancy code field includes a first-type cyclic redundancy code, it indicates that the preemption mechanism occurs; or if the cyclic redundancy code field includes a second-type cyclic redundancy code, it indicates that the preemption mechanism does not occur, where the second-type cyclic redundancy code is different from the first-type cyclic redundancy code.

With reference to the sixth possible implementation of the first aspect and the second aspect, in a seventh possible implementation of the first aspect and the second aspect, the first-type cyclic redundancy code is obtained by performing at least one of an exclusive OR operation and a flip operation on the second-type cyclic redundancy code.

With reference to the fourth possible implementation of the first aspect and the second aspect, in an eighth possible implementation of the first aspect and the second aspect, the preemption indication information is located in the delimiter signature field; and if the delimiter signature field includes a first-type delimiter signature symbol, it indicates that the preemption mechanism occurs; or if the delimiter signature field includes a second-type delimiter signature symbol, it indicates that the preemption mechanism does not occur, where the second-type delimiter signature symbol is different from the first-type delimiter signature symbol.

With reference to the fourth possible implementation of the first aspect and the second aspect, in a ninth possible implementation of the first aspect and the second aspect, the preemption indication information is located in the end frame field and the MPDU length field; and if the end frame field is set to 1 and the MPDU length field is set to 0, it indicates that the preemption mechanism occurs.

With reference to the fourth possible implementation of the first aspect and the second aspect, in a tenth possible implementation of the first aspect and the second aspect, the preemption indication information is located in the frame check sequence; and if the frame check sequence includes a first-type sequence, it indicates that the preemption mechanism occurs; or if the frame check sequence includes a second-type sequence, it indicates that the preemption mechanism does not occur, where the second-type sequence is different from the first-type sequence. The first-type sequence may be obtained by performing at least one of an exclusive OR operation and a flip operation on the second-type sequence.

With reference to the fourth possible implementation of the first aspect and the second aspect, in an eleventh possible implementation of the first aspect and the second aspect, the preemption indication information includes at least one piece of indication information in the high throughput control field, and the at least one piece of indication information includes at least one of: a control identifier, a preemption type, a quantity of padding symbols, a transmission resumption time, and information indicating whether acknowledgment information needs to be replied with.

With reference to any one of the second to eleventh possible implementations of the first aspect and the second aspect, in a twelfth possible implementation of the first aspect and the second aspect, if the preemption mechanism occurs, the PPDU further includes at least one of a packet extension field and a padding symbol that is located after the at least one A-MPDU subframe. Both the padding symbol and packet extension are used to help increase a processing time at the receive end.

In a thirteenth possible implementation of the first aspect and the second aspect, the preamble carries preemption warning information, and the preemption warning information is used to indicate whether the preemption mechanism is likely to occur.

Because the preamble in the PPDU is transmitted before the data field, the preemption warning information may be carried in the preamble, to indicate to the receive end whether the preemption mechanism is likely to occur in a process of transmitting the PPDU. If the preemption warning information indicates that the preemption mechanism is likely to occur, the receive end is ready to stop receiving a currently transmitted PPDU at any time. If the preemption warning information indicates that the preemption mechanism is not likely to occur, the receive end receives a currently transmitted PPDU according to an existing WLAN protocol.

With reference to the thirteenth possible implementation of the first aspect and the second aspect, in a fourteenth possible implementation of the first aspect and the second aspect, the preemption warning information is located in an EHT-SIG field of the preamble.

With reference to the second possible implementation of the first aspect and the second aspect, in a fifteenth possible implementation of the first aspect and the second aspect, if the preemption mechanism occurs, the PPDU further includes a preemption indication frame located after the at least one A-MPDU subframe. The preemption indication frame may be used by the receive end to determine a transmission end location of the PPDU.

With reference to the second possible implementation of the first aspect and the second aspect, in a sixteenth possible implementation of the first aspect and the second aspect, if the preemption mechanism occurs, the PPDU further includes a preemption field located after the at least one A-MPDU subframe, where the preemption field includes at least one special OFDM symbol. Optionally, the at least one special OFDM symbol may be used by the receive end to determine a transmission end location of the PPDU.

According to a third aspect, a data transmission method is provided, where the method is used for a transmit end, and the method includes:

generating preemption indication information, where the preemption indication information is used to indicate that a preemption mechanism occurs; and sending a PPDU, where the PPDU includes a preamble and a data field, and the data field carries the preemption indication information.

According to the data transmission method provided in this application, when the preemption mechanism occurs, the preemption indication information used to indicate that the preemption mechanism occurs is carried in the data field of the PPDU, and when the transmit end needs to stop transmitting a current PPDU, the transmit end may notify, by using preemption indication information, a receive end of suspension of transmitting the current PPDU. This improves data transmission flexibility. In a process in which the transmit end transmits a PPDU, when the transmit end needs to transmit a data frame with a relatively high service priority, transmission of the current PPDU can be suspended, and the data frame with a relatively high service priority can be transmitted in time. Therefore, a transmission latency of the data frame with a relatively high service priority can be reduced.

According to a fourth aspect, a data transmission method is provided, where the method is used for a receive end, and the method includes:

receiving a PPDU, where the PPDU includes a preamble and a data field, the data field carries preemption indication information, and the preemption indication information is used to indicate that a preemption mechanism occurs; and parsing the PPDU based on the preemption indication information.

In a first possible implementation of the third aspect and the fourth aspect, the preamble includes a legacy signal L-SIG field; and actual transmission duration of the PPDU is less than originally-defined transmission duration indicated by the L-SIG field.

That the preemption mechanism occurs means that a transmit end suspends sending of a current frame. The actual transmission duration of the PPDU is less than the originally-defined transmission duration indicated by the L-SIG field. In other words, a quantity of actually transmitted A-MPDU subframes in the PPDU is less than a quantity of A-MPDU subframes that are originally defined to be transmitted and that are in the PPDU.

In a second possible implementation of the third aspect and the fourth aspect, the data field includes at least one A-MPDU subframe and a preemption indication frame that is located after the at least one A-MPDU subframe, and the preemption indication frame carries the preemption indication information. The preemption indication frame may be used to indicate that the preemption mechanism occurs, and may be further used by the receive end to determine a transmission end location of the PPDU.

In a second possible implementation of the third aspect and the fourth aspect, the data field includes at least one A-MPDU subframe and a preemption field that is located after the at least one A-MPDU subframe, the preemption field includes at least one special OFDM symbol, and the preemption indication information is located in the preemption field. The at least one special OFDM symbol may be used to indicate that the preemption mechanism occurs, and may be further used by the receive end to determine a transmission end location of the PPDU.

With reference to the second possible implementation of the third aspect and the fourth aspect, in a third possible implementation of the third aspect and the fourth aspect, the special OFDM symbol includes: an OFDM symbol on which only an even-numbered subcarrier has energy, an OFDM symbol on which only an odd-numbered subcarrier has energy, an OFDM symbol that is in a predefined mode and that is known to the receive end, an OFDM symbol that is the same as a previous OFDM symbol, or an OFDM symbol that has a plurality of repetitive waveforms.

In a fourth possible implementation of the third aspect and the fourth aspect, the preamble carries preemption warning information, and the preemption warning information is used to indicate whether the preemption mechanism is likely to occur.

Because the preamble in the PPDU is transmitted before the data field, the preemption warning information may be carried in the preamble, to indicate to the receive end whether the preemption mechanism is likely to occur in a process of transmitting the PPDU. If the preemption warning information indicates that the preemption mechanism is likely to occur, the receive end is ready to stop receiving a currently transmitted PPDU at any time. If the preemption warning information indicates that the preemption mechanism is not likely to occur, the receive end receives a currently transmitted PPDU according to an existing WLAN protocol.

With reference to the fourth possible implementation of the third aspect and the fourth aspect, in a fifth possible implementation of the third aspect and the fourth aspect, the preemption warning information is located in an EHT-SIG field of the preamble.

According to a fifth aspect, a data transmission apparatus is provided, and is used for a transmit end. The data transmission apparatus has a function of implementing behavior in the data transmission method in the first aspect. The data transmission apparatus includes at least one module, and the at least one module is configured to implement the data transmission method provided in the first aspect or the third aspect.

According to a sixth aspect, a data transmission apparatus is provided, and is used for a receive end. The data transmission apparatus has a function of implementing behavior in the data transmission method in the second aspect. The data transmission apparatus includes at least one module, and the at least one module is configured to implement the data transmission method provided in the second aspect or the fourth aspect.

According to a seventh aspect, a data transmission apparatus is provided, where the apparatus is used for a transmit end and includes a memory and a processor. The memory is coupled to the processor. The memory is configured to store a computer program, where the computer program includes program instructions. The processor is configured to invoke the program instructions, to implement the data transmission method according to either the first aspect or the third aspect.

According to an eighth aspect, a data transmission apparatus is provided, where the apparatus is used for a receive end and includes a memory and a processor. The memory is coupled to the processor. The memory is configured to store a computer program, where the computer program includes program instructions. The processor is configured to invoke the program instructions, to implement the data transmission method according to either the second aspect or the fourth aspect.

According to a ninth aspect, a computer-readable storage medium is provided. The computer-readable storage medium stores a computer program, where the computer program includes at least one segment of code. The at least one segment of code may be executed by a computer, to control the computer to perform the data transmission method according to either the first aspect or the third aspect.

According to a tenth aspect, a computer program is provided. When the computer program is executed by a computer, the computer program is used to perform the data transmission method according to either the first aspect to the third aspect.

Optionally, all or a part of the computer program may be stored in a storage medium that is packaged together with a processor, or may be stored in a memory that is not packaged together with a processor.

According to an eleventh aspect, a processor is provided, where the processor includes:

at least one circuit, configured to generate preemption indication information or parse a PPDU; and
at least one circuit, configured to send and receive the PPDU.

Optionally, the processor may be a chip.

According to a twelfth aspect, a chip is provided. The chip includes a processor, configured to invoke, from a memory, and run instructions stored in the memory, so that a communications device in which the chip is installed performs the methods in the foregoing aspects.

According to a thirteenth aspect, an embodiment of this application further provides another chip. The chip may be a part of a receive end or a transmit end. The chip includes an input interface, an output interface, and a circuit. The input interface, the output interface, and the circuit are connected to each other through an internal connection path. The circuit is configured to perform the methods in the foregoing examples.

According to a fourteenth aspect, another chip is provided. The chip includes an input interface, an output interface, and a processor. Optionally, the chip further includes a memory. The input interface, the output interface, the processor, and the memory are connected to each other through an internal connection path. The processor is configured to execute code in the memory, and when the code is executed, the processor is configured to perform the methods in the foregoing aspects.

According to a fifteenth aspect, an apparatus is provided, and is configured to implement the methods in the foregoing aspects.

According to a sixteenth aspect, a data transmission system is provided, where the system includes a transmit end and at least one receive end. The transmit end includes the data transmission apparatus according to the fifth aspect, and the receive end includes the data transmission apparatus according to the sixth aspect.

According to the technical solutions provided in this application, when a transmit end needs to stop transmitting a current PPDU, the transmit end may notify, by using preemption indication information, a receive end of suspension of transmitting the current PPDU. This improves data transmission flexibility. For example, in a process in which the transmit end transmits a PPDU, when the transmit end needs to transmit a data frame with a relatively high service priority, transmission of the current PPDU can be suspended, and the data frame with a relatively high service priority can be transmitted in time. Therefore, a transmission latency of the data frame with a relatively high service priority can be reduced, reliability of a data transmission system can be improved, and a throughput of the data transmission system can be increased.

## BRIEF DESCRIPTION OF DRAWINGS

FIG. 1 is a schematic structural diagram of a data transmission system according to an embodiment of this application;
FIG. 2 is a schematic diagram of a frame structure of an MPDU according to an embodiment of this application;
FIG. 3 is a schematic structural diagram of an A-MPDU according to an embodiment of this application;
FIG. 4 is a schematic structural diagram of an MPDU delimiter according to an embodiment of this application;
FIG. 5 is a schematic structural diagram of a PPDU according to an embodiment of this application;
FIG. 6 is a flowchart of a data transmission method according to an embodiment of this application;
FIG. 7 is a schematic diagram of data transmission in a preemption transmission mode according to an embodiment of this application;
FIG. 8 is a schematic diagram of data transmission in another preemption transmission mode according to an embodiment of this application;
FIG. 9 is a schematic structural diagram of another PPDU according to an embodiment of this application;
FIG. 10 is a schematic structural diagram of still another PPDU according to an embodiment of this application;
FIG. 11 is a schematic structural diagram of yet another PPDU according to an embodiment of this application;
FIG. 12 is a schematic structural diagram of a further PPDU according to an embodiment of this application;
FIG. 13 is a schematic structural diagram of a data transmission apparatus according to an embodiment of this application;
FIG. 14 is a schematic structural diagram of another data transmission apparatus according to an embodiment of this application;
FIG. 15 is a schematic structural diagram of a data transmission apparatus according to another embodiment of this application;
FIG. 16 is a schematic structural diagram of another data transmission apparatus according to another embodiment of this application;
FIG. 17 is a block diagram of a data transmission apparatus according to an embodiment of this application; and
FIG. 18 is a block diagram of another data transmission apparatus according to an embodiment of this application.

## DESCRIPTION OF EMBODIMENTS

To make the objectives, technical solutions, and advantages of this application clearer, the following further describes the implementations of this application in detail with reference to the accompanying drawings.

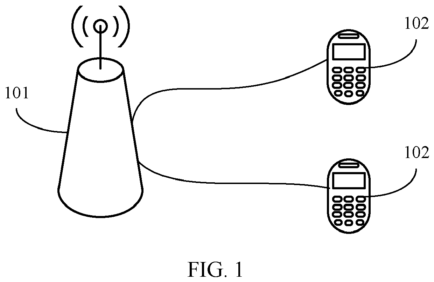

FIG. 1 is a schematic structural diagram of a data transmission system according to an embodiment of this application. As shown in FIG. 1, the data transmission system includes at least one transmit end 101 and at least one receive end 102. The transmit end 101 and the receive end 102 may communicate with each other by using a wireless network. Referring to FIG. 1, an example in which the data transmission system includes one transmit end 101 and two receive ends 102 is used for description in this embodiment of this application.

Optionally, the data transmission system provided in this embodiment of this application may be a wireless communications system, for example, a wireless local area network (wireless LAN, WLAN). The wireless communications system may support a plurality of WLAN communications protocols, for example, the Institute of Electrical and Electronics Engineers (Institute of Electrical and Electronics Engineers, IEEE) 802.11ax protocol, and a next-generation protocol or a next-next-generation protocol of the IEEE 802.11ax protocol. For ease of description, a WLAN is used as an example for description in this embodiment of this application. The WLAN may include a plurality of basic service sets (Basic Service Set, BSS). Nodes in the basic service set include an access point (access point, AP) station and a non-access point station (None access point station, Non-AP STA). The access point station is usually referred to as an access point for short, that is, an AP, and a non-access point station is usually referred to as a station for short, that is, a STA. Each basic service set may include one AP and a plurality of STAs associated with the AP. The access point is an apparatus having a wireless transceiver function, and may provide a service for the station. The station is an apparatus having a wireless transceiver function, and may access a wireless local area network based on the access point.

The AP may also be referred to as a wireless access point, a hotspot, or the like. The AP is an access point used by a mobile user to access a wired network, and is mainly deployed in a home, a building, and a campus, with a typical coverage radius of tens of meters to hundreds of meters. Certainly, the AP may alternatively be deployed outdoors. The AP is equivalent to a bridge connecting a wired network and a wireless network. Main functions of the AP are to connect STAs together and then connect the wireless network to the wired network. Optionally, the AP may be a terminal device or a network device with a wireless fidelity (wireless fidelity, Wi-Fi) chip. For example, the AP may be a communications server, a router, a switch, or a bridge.

Optionally, the STA may be a wireless communications chip, a wireless sensor, or a wireless communications terminal. For example, the STA may be a mobile phone, a tablet computer, a set-top box, a smart television set, a smart wearable device, an in-vehicle communications device, a computer, or the like that supports a Wi-Fi communication function.

Optionally, in this embodiment of this application, the transmit end 101 may be an AP, and the receive end 102 may be a STA. Alternatively, the transmit end 101 may be an AP, and the receive end 102 may also be an AP. Alternatively, the transmit end 101 may be a STA, and the receive end 102 may also be a STA. An example in which the transmit end 101 is an AP and the receive ends 102 are both STAs is used for description in this embodiment of this application.

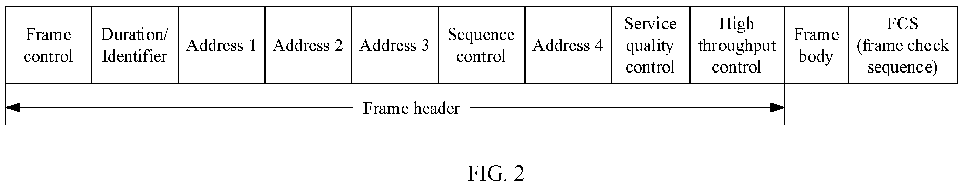

In the WLAN, data, control signaling, management signaling, or the like is transmitted between the AP and the STA by using an MPDU. The MPDU generally includes a frame header, a frame body (Frame Body), and a frame check sequence (Frame Check Sequence, FCS). The frame body is used to carry data, management information, or control information, where the data, the management information, or the control information is transmitted from an upper layer. For some specific types of MPDUs, for example, an acknowledgment frame, the frame body may not exist. The FCS is used to check whether the MPDU is correctly transmitted. The frame header may include at least one of the following fields: a frame control (Frame Control) field, a duration or identifier (Duration/ID) field, an address information field, a sequence control (Sequence Control) field, a quality of service control (Quality of Service Control, QoS Control) field, and a high throughput control (High Throughput Control, HT Control) field. For explanations of the fields, refer to the IEEE802.11 protocol. Details are not described herein in this embodiment of this application. For example, FIG. 2 is a schematic diagram of a frame structure of an MPDU according to an embodiment of this application. As shown in FIG. 2, a frame header includes a frame control field, a duration/identifier (duration or identifier) field, an address information field (for example, an address 1, an address 2, an address 3, and an address 4), a sequence control field, a quality of service control field, and a high throughput control field. It should be noted that, FIG. 2 is merely used as an example to describe the frame structure of the MPDU. Content included in the frame header of the MPDU and an arrangement sequence of the fields are not limited in this embodiment of this application.

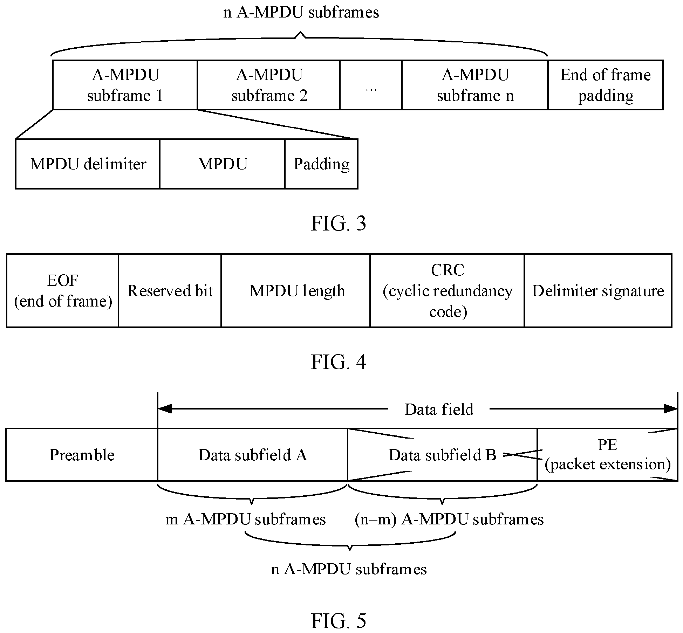

To improve WLAN performance, currently, a frame aggregation technology is used at a MAC layer to aggregate a plurality of MPDUs into one aggregated MPDU (Aggregated MPDU, A-MPDU). Because all MPDUs in a same A-MPDU are transmitted by using one PPDU, overheads of a preamble of the PPDU and overheads for contending a channel can be reduced, and transmission efficiency can be improved. FIG. 3 is a schematic structural diagram of an A-MPDU in the IEEE 802.11 standard. As shown in FIG. 3, the A-MPDU includes n A-MPDU subframes, where n is an integer greater than 1. Optionally, referring to FIG. 3, the A-MPDU may further include an end of frame (end of frame, EOF) padding (pad) field located after the n A-MPDU subframes. Still referring to FIG. 3, each A-MPDU subframe includes an MPDU delimiter (delimiter) and an MPDU. Optionally, the A-MPDU subframe may further include a padding field. The MPDU delimiter is used to separate a plurality of aggregated MPDUs.

Optionally, the MPDU delimiter includes at least one of the following fields: an EOF field, a reserved (reserved) bit field, an MPDU length (MPDU length) field, a cyclic redundancy code (Cyclic Redundancy Code, CRC) field, and a delimiter signature (delimiter signature) field. An EOF is usually used to indicate whether the MPDU is a last MPDU in the A-MPDU. An MPDU length is used to indicate a quantity of bytes of an MPDU following a current MPDU delimiter, that is, the MPDU length is used to indicate a quantity of bytes of an MPDU in a current A-MPDU subframe. A delimiter signature is a symbolistic sequence (an ASCII value of the symbolistic sequence is 'N'), and is used by a receive end to search for a delimiter. Even if the receive end decodes a delimiter or an MPDU incorrectly, the receive end can still search for a next delimiter signature to find a next MPDU, so as to prevent a phenomenon of error spreading. A CRC, similar to an FCS, is used by the receive end to check whether an error occurs in a delimiter. A sliding window may be further determined based on a length of the MPDU delimiter. After a CRC check succeeds, a next MPDU delimiter is searched for by using the sliding window. The length of the MPDU delimiter is 4 bytes. For example, FIG. 4 is a schematic structural diagram of an MPDU delimiter according to an embodiment of this application. As shown in FIG. 4, the MPDU delimiter includes an EOF field, a reserved bit field, an MPDU length field, a CRC field, and a delimiter signature field. It should be noted that, FIG. 2 is merely used as an example to describe a structure of the MPDU delimiter. Content included in the MPDU delimiter and an arrangement sequence of the fields are not limited in this embodiment of this application.

It should be noted that, an A-MPDU is carried in a data field of a PPDU for transmission. According to an existing WLAN protocol, in a process in which a transmit end sends a PPDU, if a PPDU with a relatively high service priority needs to be transmitted, the PPDU with a relatively high service priority can be sent only after sending of the currently sent PPDU ends. Consequently, a transmission latency of the PPDU with a relatively high service priority is relatively large, and current data transmission flexibility is relatively low.

In this application, a preemption mechanism is introduced into the IEEE802.11 standard. When the preemption mechanism occurs in a process of transmitting a PPDU, a transmit end may suspend transmission of an A-MPDU, and transmit a PPDU with a relatively high service priority, to reduce a transmission latency of the PPDU with a relatively high service priority, and improve data transmission flexibility. That the preemption mechanism occurs means that, in a process in which the transmit end transmits a PPDU, the transmit end suspends transmission of the PPDU, where actual transmission duration of the PPDU is less than originally-defined transmission duration indicated by a legacy signal (legacy signal, L-SIG) field of the PPDU. That the preemption mechanism does not occur means that the transmit end normally transmits a PPDU. In this embodiment of this application, the preemption mechanism may also be referred to as a transmission suspension mechanism. Whether the preemption mechanism occurs is used to indicate whether the transmit end suspends transmission of a current PPDU.

Optionally, a condition for triggering occurrence of the preemption mechanism includes that a data frame with a relatively high service priority preempts a transmission channel of a data frame with a relatively low service priority, the transmit end is required to stop transmission of a current frame, or the like. A condition for triggering occurrence of the preemption mechanism is not limited in this embodiment of this application. In the following embodiments of this application, that a data frame with a relatively high service priority preempts a transmission channel of a data frame with a relatively low service priority is used as a condition for triggering occurrence of the preemption mechanism is used as an example for description.

For example, a transmit end and a receive end provided in the embodiments of this application each may include a preemptable queue and an express queue, and there is a communications interface between the preemptable queue and the express queue, to perform mutual communication. The preemptable queue is used to store a preemptable frame (preemptable frame), and the express queue is used to store an express frame (express frame). The express frame is a frame with a relatively high service priority, and the preemptable frame is a frame with a relatively low service priority. Because a latency requirement of a frame with a relatively high service priority is usually higher than a latency requirement of a frame with a relatively low service priority, the express frame has a higher latency requirement in comparison with the preemptable frame. Optionally, in a process in which the transmit end sends a preemptable frame, when an express frame needs to be sent, the transmit end receives an indication that is internally sent by the transmit end and that indicates to stop transmission of the current PPDU, so as to trigger a preemption mechanism to occur; and adds corresponding signaling information to the current PPDU, to indicate to the receive end that transmission of the PPDU is to be suspended.

It should be noted that, there is a data packet length indication in a preamble of the PPDU. For example, in a legacy signal (legacy signal, L-SIG) field of the preamble, there are a length (length) subfield and a rate (rate) subfield. The transmit end indirectly indicates originally-defined transmission duration of the PPDU by using the length subfield and the rate subfield in the L-SIG field. The rate subfield is fixedly set to 6 megabits per second (Megabits per second, Mbps). Because the rate subfield is set to a fixed value, the originally-defined transmission duration of the PPDU is indirectly indicated by using the length subfield. A formula for calculating a length of the length subfield is as follows:

$$Length = \left\lceil \frac{TXTIME - SignalExtension - 20}{4} \right\rceil \times 3 - 3 - m$$

SignalExtension (signal extension) represents a parameter related to a transmission frequency band. When the transmit end works in 2.4 GHz, the parameter is 6 $\mu$s (microsecond). When the transmit end works in 5 GHz, the parameter is 0 $\mu$s. TXTIME represents the originally-defined transmission duration of the entire PPDU. A value of m may be 0, 1, or 2. This depends on a specific PPDU type. Details are not described herein in this embodiment of this application.

When the preemption mechanism occurs, actual transmission duration of the PPDU is less than duration of TXTIME (that is, the originally-defined transmission duration) corresponding to Length in the L-SIG field. Correspondingly, the receive end calculates receiving duration by using the length subfield in the L-SIG field:

$$RXTIME = \left\lceil \frac{Length+3}{3} \right\rceil \times 4 + 20 + SignalExtension$$

Similarly, when the preemption mechanism occurs, the actual transmission duration of the PPDU received by the receive end is less than duration of RXTIME (that is, the originally-defined transmission duration) calculated by using Length. It should be noted that, RXTIME and TXTIME that are calculated by using the Length field may be slightly different because of an actual symbol length and the like.

It can be learned from the foregoing content that, when the preemption mechanism occurs, the actual transmission duration of the PPDU is less than the originally-defined transmission duration indicated by the L-SIG field. It may alternatively be understood as follows: The PPDU is originally used to transmit n A-MPDU subframes, and if the preemption mechanism occurs in a transmission process, m A-MPDU subframes in the PPDU are actually transmitted, where both n and m are positive integers, and m < n.

For example, FIG. 5 is a schematic structural diagram of a PPDU according to an embodiment of this application. As shown in FIG. 5, the PPDU includes a preamble and a data field, and the preamble is used to assist in receiving the data field. The data field includes a data subfield A and a data subfield B. The data subfield A includes m A-MPDU subframes, and the data subfield B includes (n-m) A-MPDU subframes. Optionally, the data field further includes a packet extension (packet extension, PE) field located after n A-MPDU subframes. If a preemption mechanism occurs, in the PPDU, the m A-MPDU subframes in the data subfield A are actually transmitted, but the (n-m) A-MPDU subframes in the data subfield B and the PE field are actually not transmitted.

It should be noted that, in this embodiment of this application, an A-MPDU subframe is used as a minimum transmission unit. To be specific, after the preemption mechanism occurs, in the PPDU, the m A-MPDU subframes in the n A-MPDU subframes that are originally to be transmitted have been sent, and the (n-m) A-MPDU subframes have not been sent. As specified in the IEEE802.11 standard, each MPDU has a specific sequence number index. Therefore, fragment information does not need to be additionally indicated for the (n-m) A-MPDUs that have not been sent; and the (n-m) A-MPDUs that have not been sent do not need to correspond to the m A-MPDU subframes that have been sent, either, but only need to be carried in a new PPDU for transmission.

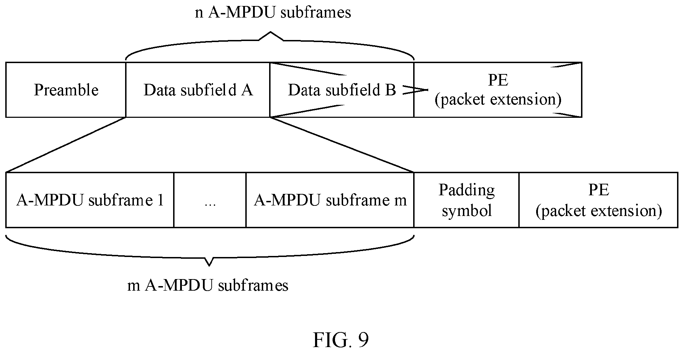

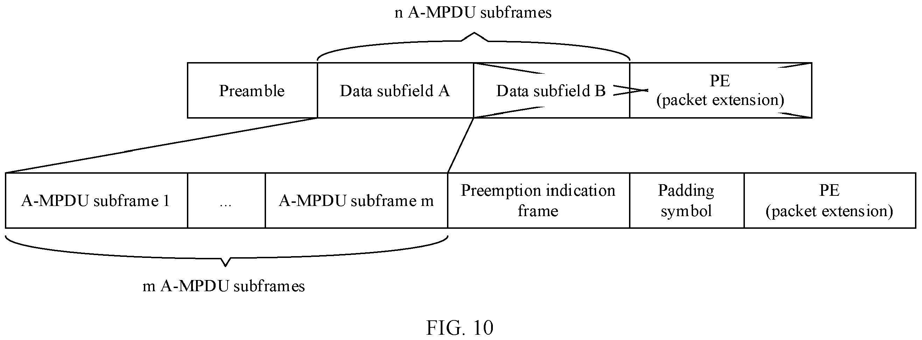

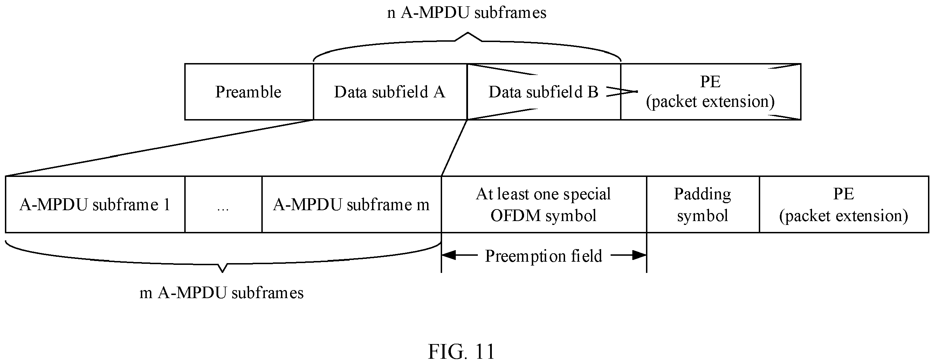

In this embodiment of this application, a MAC method may be used to indicate to the receive end that the preemption mechanism occurs, that is, indicate, in a MAC frame structure, to the receive end that the preemption mechanism occurs; and/or a physical method may be used to indicate to the receive end that the preemption mechanism occurs, that is, indicate, in a physical layer structure, to the receive end that the preemption mechanism occurs. In the following embodiments of this application, manners of indicating that a preemption mechanism occurs are described in detail by using PPDUs of three different structures. Both a PPDU shown in FIG. 9 and a PPDU shown in FIG. 10 correspond to the MAC method, and a PPDU shown in FIG. 11 corresponds to the physical method. For ease of description, in the embodiments of this application, related signaling information used to indicate occurrence of the preemption mechanism is collectively referred to as preemption indication information.

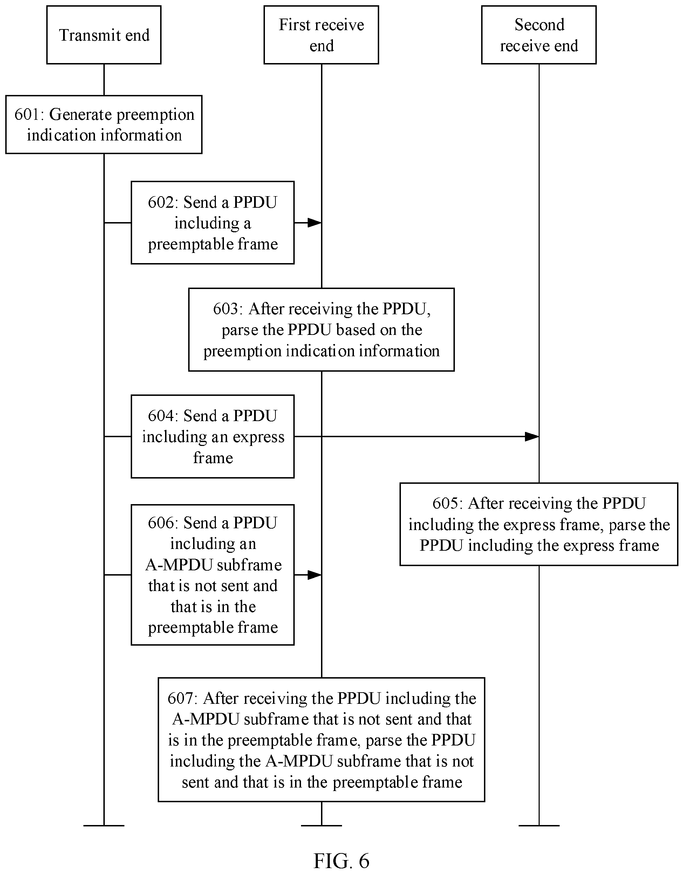

FIG. 6 is a flowchart of a data transmission method according to an embodiment of this application. The data transmission method may be used in the data transmission system shown in FIG. 1. As shown in FIG. 6, the method includes the following steps.

Step 601: A transmit end generates preemption indication information.

In an optional embodiment of this application, the preemption indication information is used to indicate whether a preemption mechanism occurs.

In another optional embodiment of this application, the preemption indication information is used to indicate that a preemption mechanism occurs.

Step 602: The transmit end sends a PPDU including a preemptable frame.

The PPDU includes a preamble and a data field, and the data field carries the preemption indication information.

Step 603: After receiving the PPDU, a first receive end parses the PPDU based on the preemption indication information.

Optionally, if the preemption indication information indicates that the preemption mechanism occurs, after parsing a received A-MPDU subframe in the PPDU, the first receive end may generate acknowledgment information, and reply to the transmit end with the acknowledgment information. Further, if the preemption mechanism occurs, the foregoing data transmission method further includes the following process.

Step 604: The transmit end sends a PPDU including an express frame.

If the preemption indication information indicates that the preemption mechanism occurs, the transmit end sends the PPDU including the express frame.

Step 605: After receiving the PPDU including the express frame, a second receive end parses the PPDU including the express frame.

Optionally, after parsing the PPDU including the express frame, the second receive end may generate acknowledgment information for the PPDU including the express frame, and reply to the transmit end with the acknowledgment information for the PPDU including the express frame.

Step 606: The transmit end sends a PPDU including an A-MPDU subframe that is not sent and that is in the preemptable frame.

Step 607: After receiving the PPDU including the A-MPDU subframe that is not sent and that is in the preemptable frame, the first receive end parses the PPDU including the A-MPDU subframe that is not sent and that is in the preemptable frame.

Optionally, after parsing the PPDU including the A-MPDU subframe that is not sent and that is in the preemptable frame, the first receive end may generate acknowledgment information for the PPDU including the A-MPDU subframe that is not sent and that is in the preemptable frame, and reply to the transmit end with the acknowledgment information for the PPDU including the A-MPDU subframe that is not sent and that is in the preemptable frame.

It should be noted that, the first receive end and the second receive end may be a same receive end or may be different receive ends. This is not limited in this embodiment of this application.

Optionally, this embodiment of this application provides two preemption transmission modes.

In a first preemption transmission mode, step 604 and step 606 are performed simultaneously. The transmit end simultaneously sends, in an orthogonal frequency division multiple access (orthogonal frequency division multiple access, OFDMA) manner or a multi-user multiple-input multiple-output (multiple user-multiple input multiple output, MU-MIMO) manner, the PPDU including the express frame and the PPDU including the A-MPDU subframe that is not sent and that is in the preemptable frame.

It should be noted that, the first preemption transmission mode can reduce latency impact of the preemption mechanism on the preemptable frame and avoid a hunger phenomenon.

In a second preemption transmission mode, step 604 and step 606 are performed sequentially. The transmit end sends the PPDU including the express frame. If the express frame is transmitted completely at a current transmit opportunity (transmit opportunity, TXOP) or within originally-defined transmission duration of the PPDU that is preempted, the transmit end continues to send the PPDU including the A-MPDU subframe that is not sent and that is in the preemptable frame. Otherwise, after contending for a channel again, the transmit end sends the PPDU including the A-MPDU subframe that is not sent and that is in the preemptable frame.

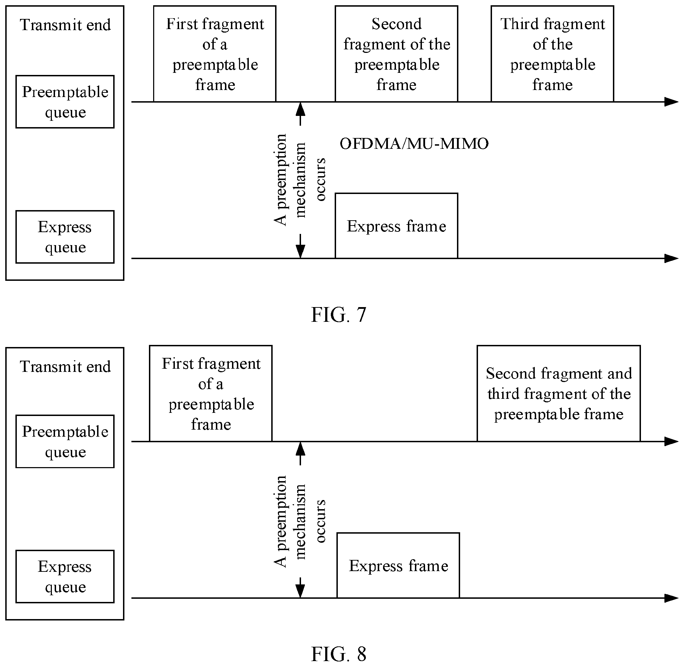

For example, it is assumed that the preemptable frame includes a first fragment, a second fragment, and a third fragment, and the preemption mechanism occurs after the transmit end sends the first fragment in the preemptable frame. The first fragment, the second fragment, and the third fragment each include at least one A-MPDU subframe. For example, referring to FIG. 5, the first fragment includes the m A-MPDU subframes in the data subfield A, and a union set of A-MPDU subframes included in the second fragment and the third fragment includes the (n-m) A-MPDU subframes in the data subfield B. FIG. 7 is a schematic diagram of data transmission in a first preemption transmission mode according to an embodiment of this application. As shown in FIG. 7, a transmit end simultaneously transmits, in an OFDMA manner or an MU-MIMO manner (OFDMA/MU-MIMO for short), an express frame in an express queue and a second fragment and a third fragment that are in a preemptable frame in a preemptable queue. In addition, the second fragment and the third fragment that are in the preemptable frame may alternatively be aggregated into one A-MPDU in a frame aggregation manner, and then the A-MPDU is sent. FIG. 8 is a schematic diagram of data transmission in a second preemption transmission mode according to an embodiment of this application. As shown in FIG. 8, a transmit end first transmits an express frame in an express queue, and then transmits a second fragment and a third fragment that are in a preemptable frame in a preemptable queue.

It should be noted that, a sequence of the steps of the data transmission method provided in the embodiments of this application may be properly adjusted, and a step may be added or removed based on situations. Any variation readily figured out by a person skilled in the art within the technical scope disclosed in this application shall fall within the protection scope of this application, and therefore, details are not described herein.

According to the data transmission method provided in the embodiments of this application, when a transmit end needs to stop transmitting a current PPDU, the transmit end may notify, by using preemption indication information, a receive end of suspension of transmitting the current PPDU. This improves data transmission flexibility. In a process in which the transmit end transmits a PPDU, when the transmit end needs to transmit a data frame with a relatively high service priority, transmission of the current PPDU can be suspended, and the data frame with a relatively high service priority can be transmitted in time. Therefore, a transmission latency of the data frame with a relatively high service priority can be reduced.

In an optional embodiment of this application, the preemption indication information is used to indicate whether a preemption mechanism occurs. In this case, in the PPDU shown in FIG. 5, each A-MPDU subframe in the data field carries the preemption indication information.

For example, FIG. 9 is a schematic structural diagram of another PPDU according to an embodiment of this application. As shown in FIG. 9, a data field originally to be transmitted in the PPDU includes n A-MPDU subframes and a PE field located after the n A-MPDU subframes. First m A-MPDU subframes in the n A-MPDU subframes are located in a data subfield A, and remaining (n-m) A-MPDU subframes are located in a data subfield B. The m A-MPDU subframes in the data subfield A are A-MPDU subframes in the PPDU that are actually transmitted, and the (n-m) A-MPDU subframes in the data subfield B and the PE field that is located after the n A-MPDU subframes are actually not transmitted.

Optionally, for a structure of each A-MPDU subframe, refer to FIG. 3 and FIG. 4. The preemption indication information is located in at least one of the following fields: an EOF field, a reserved bit field, an MPDU length field, a CRC field, a delimiter signature field, a high throughput control field of a frame header, and an FCS.

In a first possible implementation, the preemption indication information is located in the reserved bit field. If the reserved bit field is a first value, it indicates that the preemption mechanism occurs. If the reserved bit field is a second value, it indicates that the preemption mechanism does not occur. The second value is different from the first value. For example, when the reserved bit field is 1, it indicates that the preemption mechanism occurs. When the reserved bit field is 0, it indicates that the preemption mechanism does not occur.

The value of the reserved bit field is used to indicate whether the preemption mechanism occurs, and no new field needs to be added, so that data transmission compatibility can be ensured.

In a second possible implementation, the preemption indication information is located in the CRC field. If the CRC field includes a first-type CRC, it indicates that the preemption mechanism occurs. If the CRC field includes a second-type CRC, it indicates that the preemption mechanism does not occur. The second-type CRC is different from the first-type CRC.

Optionally, the first-type CRC is obtained by performing at least one of an exclusive OR operation and a flip operation on the second-type CRC, or a type of the first-type CRC is different from a type of the second-type CRC. For example, when a CRC is generated by performing a modulo-2 operation by using a polynomial $x^8 + x^2 + x^1 + 1$ according to the existing IEEE802.11-2016 standard, it indicates that the preemption mechanism does not occur. When an additional exclusive OR operation is performed on the CRC, for example, the exclusive OR operation is performed on an 8-bit CRC and 00001111 to generate an xCRC, or a different polynomial is used to generate an xCRC, it indicates that the preemption mechanism occurs.

Different content is carried in the CRC field to indicate whether the preemption mechanism occurs, and no new field needs to be added. The receive end may determine, by parsing the content in the CRC field, whether the preemption mechanism occurs, and no new operation amount needs to be added. This ensures data transmission compatibility and also ensures data transmission efficiency.

In a third possible implementation, the preemption indication information is located in the delimiter signature field. If the delimiter signature field includes a first-type delimiter signature symbol, it indicates that the preemption mechanism occurs. If the delimiter signature field includes a second-type delimiter signature symbol, it indicates that the preemption mechanism does not occur. The second-type delimiter signature symbol is different from the first-type delimiter signature symbol. For example, when the delimiter signature field includes an ASCII code 'N', it indicates that the preemption mechanism does not occur. When the delimiter signature field includes another ASCII code, for example, an ASCII code 'Y', it indicates that the preemption mechanism occurs.

Different content is carried in the delimiter signature field to indicate whether the preemption mechanism occurs, and no new field needs to be added. The receive end may determine, by parsing the content in the delimiter signature field, whether the preemption mechanism occurs, and no new operation amount needs to be added. This ensures data transmission compatibility and also ensures data transmission efficiency.

In a fourth possible implementation, the preemption indication information is located in the EOF field and the MPDU length field. If the EOF field is set to 1 and the MPDU length field is set to 0, it indicates presence of EOF padding, and indicates that the preemption mechanism occurs.

In a fifth possible implementation, the preemption indication information is located in the FCS. If the FCS includes a first-type sequence, it indicates that the preemption mechanism occurs. If the FCS includes a second-type sequence, it indicates that the preemption mechanism does not occur. The second-type sequence is different from the first-type sequence. Optionally, the first-type sequence is obtained by performing at least one of an exclusive OR operation and a flip operation on the second-type sequence, or a type of the first-type sequence is different from a type of the second-type sequence.

Different types of the FCS are used to indicate whether the preemption mechanism occurs, and no new field needs to be added. The receive end may determine, by parsing the FCS, whether the preemption mechanism occurs, and no new operation amount needs to be added. This ensures data transmission compatibility and also ensures data transmission efficiency.

In a sixth possible implementation, the preemption indication information includes at least one piece of indication information in the high throughput control field, and the at least one piece of indication information includes at least one of: a control identifier, a preemption type, a quantity of padding symbols, a transmission resumption time, and information indicating whether acknowledgment information needs to be replied with.

The control identifier is used to indicate a type of subsequent control information. A length of the control identifier is 4 bits, and currently, 0 to 6 have been used to indicate other types of control information. If the preemption indication information is carried in a form of control information, the control identifier may be one of 7 to 15, and is used to indicate that a type of subsequent control information is preemption indication information. A preemption type may be defined for a preemption transmission mode in the IEEE802.11 standard. For example, two preemption types may be defined for the foregoing two preemption transmission modes. The quantity of padding symbols is used to indicate a quantity of padding symbols located after an A-MPDU subframe, and the padding symbol is used to help increase a processing time at the receive end. The transmission resumption time is used to indicate to the receive end a time at which transmission of a preemptable frame can be continued. Before the transmission of the preemptable frame is resumed, the receive end may be in a sleep mode based on the transmission resumption time, thereby achieving an effect of energy saving. The information indicating whether acknowledgment information needs to be replied with is used to indicate whether the receive end needs to reply with acknowledgment information when the preemption mechanism occurs.

It should be noted that one or more pieces of indication information in the high throughput control field may alternatively be agreed upon by the transmit end and the receive end in advance. When the indication information that is agreed upon changes, an indication is provided again, and does not need to be carried in each A-MPDU subframe. Alternatively, the indication information in the high throughput control field may be carried in each A-MPDU subframe. This is not limited in this embodiment of this application.

Optionally, if the preemption mechanism occurs, the preemption indication information carried in a last A-MPDU subframe in the at least one A-MPDU subframe indicates that the preemption mechanism occurs. In addition, the preemption indication information carried in all A-MPDU subframes that are transmitted before the last A-MPDU subframe indicates that the preemption mechanism does not occur.

Optionally, if the preemption mechanism occurs, as shown in FIG. 9, the PPDU may further include at least one of a PE field and a padding symbol that is located after the m A-MPDU subframes. Both the padding symbol and packet extension are used to help increase a processing time at the receive end. In other words, after transmitting the m A-MPDU subframes to the receive end, the transmit end may continue to transmit content of the padding symbol and/or the PE field to the receive end, to increase the processing time at the receive end.

Optionally, an implementation process of step 603 includes: The receive end determines a location of a preemption end symbol in the PPDU based on the preemption indication information, where the preemption end symbol is used to indicate a transmission end location of the PPDU. The preemption end symbol is a last orthogonal frequency division multiplexing (orthogonal frequency division multiplexing, OFDM) symbol including a target A-MPDU subframe or a last OFDM symbol including a code block in which a target A-MPDU subframe is located, and the target A-MPDU subframe is a last A-MPDU subframe in the PPDU.

It should be noted that, after determining the location of the preemption end symbol in the PPDU, the receive end may determine the transmission end position of the PPDU based on the location of the preemption end symbol and a quantity of padding symbols indicated by the high throughput control field, so that the receive end quickly generates acknowledgment information of the PPDU.

Optionally, the receive end may obtain the location of the preemption end symbol through calculation based on information such as a rate, an MPDU length, and a code block length.

For example, when binary convolutional coding (binary convolutional coding, BBC) modulation is performed on the data field of the PPDU, the preemption end symbol is the last OFDM symbol including a current A-MPDU subframe (that is, the target A-MPDU subframe). A quantity of information bits that can be carried in an OFDM symbol is a number of data bits per symbol (number of data bits per symbol, $N_{DBPS}$), and a start bit of an MPDU delimiter of the A-MPDU subframe is a $B1^{th}$ bit in sorted information bits carried in an OFDM symbol in which the A-MPDU subframe is located. An MPDU length field in the MPDU delimiter of the A-MPDU subframe indicates that a length of the A-MPDU subframe is L bytes. In this case, the preemption end symbol is a $C1^{th}$ symbol after a first symbol that carries the A-MPDU subframe.

C1 is calculated according to the following formula:

$$C1 = \left\lceil \frac{8 \times (4 + 4 * \left\lceil \dfrac{L}{4} \right\rceil) - (N_{DBPS} - B1 + 1)}{N_{DBPS}} \right\rceil$$

For example, when the $N_{DBPS}$ is 117, the first symbol in which the A-MPDU subframe is located is a tenth symbol in the data field of the PPDU, and the A-MPDU subframe starts from a 20th bit (first 19 bits carry previous information), that is, B1 = 20. L indicates 200 bytes. In this case, C1 is equal to 14. That is, the location of the preemption end symbol is a 24th symbol in the data field of the PPDU.

For another example, when low density parity check (low density parity check, LDPC) modulation is performed on the data field of the PPDU, the preemption end symbol is the last OFDM symbol including the code block in which a current A-MPDU subframe (that is, the target A-MPDU subframe) is located. A quantity of information bits that can be carried in an OFDM symbol is $N_{DBPS}$, and a start bit of an MPDU delimiter of the A-MPDU subframe is a B1th bit in sorted information bits carried in an OFDM symbol in which the A-MPDU subframe is located. An MPDU length field in the MPDU delimiter of the A-MPDU subframe indicates that a length of the A-MPDU subframe is L bytes. A length of an LDPC code block is L LDPC bits, and a code rate is R. A bit in which the A-MPDU subframe ends is a B2th bit of an OFDM symbol in which the A-MPDU subframe is located, and is a B3th bit of an LDPC code block in which the A-MPDU subframe is located. In this case, the preemption end symbol is a C2th symbol after a first symbol that carries the A-MPDU subframe. C2 is calculated according to the following formula:

$$C2 = \begin{cases} \left\lceil \dfrac{8 \times (4 + 4 * \left\lceil \frac{L}{4} \right\rceil) - (N_{DBPS} - B1 + 1)}{N_{DBPS}} \right\rceil & \text{if } N_{DBPS} - B2 \geq L_{LDPC} \cdot R - B3 \\[4ex] \left\lceil \dfrac{8 \times (4 + 4 * \left\lceil \frac{L}{4} \right\rceil) - (N_{DBPS} - B1 + 1)}{N_{DBPS}} \right\rceil + \left\lceil \dfrac{L_{LDPC} \cdot R - B3 + 1}{N_{DBPS}} \right\rceil & \text{Otherwise} \end{cases}$$

Optionally, the transmit end may alternatively indicate the location of the preemption end symbol to the receive end explicitly. For example, the transmit end may indicate, to the receive end, a quantity of OFDM symbols between the preemption end symbol and a currently transmitted OFDM symbol.

According to the PPDU provided in this embodiment of this application, the preemption indication information used to indicate whether the preemption mechanism occurs is carried in each A-MPDU subframe, so that whether the preemption mechanism occurs can be indicated to the receive end explicitly. When the preemption mechanism occurs, the preemption indication information carried in the currently transmitted A-MPDU subframe indicates that the preemption mechanism occurs, and the currently transmitted A-MPDU subframe is a last A-MPDU subframe transmitted in the PPDU. After receiving the currently transmitted A-MPDU subframe, the receive end may determine that the preemption mechanism occurs. In addition, after receiving the currently transmitted A-MPDU subframe, the receive end may further calculate the location of the preemption end symbol, to determine a transmission end location of the current PPDU. In comparison with a related technology, this improves data transmission flexibility.

In a process in which the transmit end transmits a PPDU, when the transmit end needs to transmit a data frame with a relatively high service priority, transmission of the current PPDU can be suspended, and the data frame with a relatively high service priority can be transmitted in time. Therefore, a transmission latency of the data frame with a relatively high service priority can be reduced.

In another optional embodiment of this application, the preemption indication information is used to indicate that a preemption mechanism occurs. In this case, in the PPDU shown in FIG. 5, a field located after the data subfield A carries the preemption indication information. To be specific, after transmitting the A-MPDU subframe in the data subfield A to the receive end, the transmit end continues to transmit, to the receive end, the field that carries the preemption indication information.

For example, FIG. 10 is a schematic structural diagram of still another PPDU according to an embodiment of this application. As shown in FIG. 10, a data field includes at least one A-MPDU subframe and a preemption indication frame located after the at least one A-MPDU subframe, and the preemption indication frame carries preemption indication information. In other words, after transmitting the at least one A-MPDU subframe to a receive end, a transmit end continues to transmit the preemption indication frame to the receive end.

Still referring to FIG. 10, a data field originally to be transmitted in the PPDU includes n A-MPDU subframes and a PE field located after the n A-MPDU subframes. First m A-MPDU subframes in the n A-MPDU subframes are located in a data subfield A, and remaining (n-m) A-MPDU subframes are located in a data subfield B. The m A-MPDU subframes in the data subfield A are A-MPDU subframes in the PPDU that are actually transmitted, and the (n-m) A-MPDU subframes in the data subfield B and the PE field that is located after the n A-MPDU subframes are actually not transmitted. After transmitting the m A-MPDU subframes in the data subfield A to the receive end, the transmit end needs to continue to transmit the preemption indication frame to the receive end. In other words, the PPDU actually transmitted by the transmit end includes the m A-MPDU subframes in the data subfield A and the preemption indication frame.

Optionally, as shown in FIG. 10, the PPDU may further include at least one of a PE field and a padding symbol that is located after the preemption indication frame. Both the padding symbol and packet extension are used to help increase a processing time at the receive end. In other words, after transmitting the preemption indication frame to the receive end, the transmit end may continue to transmit content of the padding symbol and/or the PE field to the receive end, to increase the processing time at the receive end.

Optionally, a MAC frame type of the preemption indication frame is different from a MAC frame type of any one A-MPDU subframe in the at least one A-MPDU subframe in the data field, and the MAC frame type of the preemption indication frame may be any reserved MAC frame type in the IEEE802.11 standard. For example, a type value of the preemption indication frame is set to 0, and a subtype value of the preemption indication frame is set to 7 or 15. For another example, a type value of the preemption indication frame is set to 1, and a subtype value of the preemption indication frame is set to any one of 0 to 2 or 15. For another example, a type value of the preemption indication frame is set to 2, and a subtype value of the preemption indication frame is set to 1, 2, 3, 5, 6, 7, or 13. A type value of the preemption indication frame is set to 3, and a subtype value of the preemption indication frame is set to any one of 2 to 15. The MAC frame type of the preemption indication frame is not limited in this embodiment of this application.

For another example, FIG. 11 is a schematic structural diagram of yet another PPDU according to an embodiment of this application. As shown in FIG. 11, a data field includes at least one A-MPDU subframe and a preemption field located after the at least one A-MPDU subframe. The preemption field includes at least one special OFDM symbol, and preemption indication information is located in the preemption field. In other words, the at least one special OFDM symbol located in the preemption field may be used as the preemption indication information.

Still referring to FIG. 11, a data field originally to be transmitted in the PPDU includes n A-MPDU subframes and a PE field located after the n A-MPDU subframes. First m A-MPDU subframes in the n A-MPDU subframes are located in a data subfield A, and remaining (n-m) A-MPDU subframes are located in a data subfield B. The m A-MPDU subframes in the data subfield A are A-MPDU subframes in the PPDU that are actually transmitted, and the (n-m) A-MPDU subframes in the data subfield B and the PE field that is located after the n A-MPDU subframes are actually not transmitted. After transmitting the m A-MPDU subframes in the data subfield A to a receive end, a transmit end needs to continue to transmit the at least one special OFDM symbol in the preemption field located after the data subfield A to the receive end. In other words, the PPDU actually transmitted by the transmit end includes the m A-MPDU subframes in the data subfield A and the at least one special OFDM symbol in the preemption field.

Optionally, as shown in FIG. 11, the PPDU may further include at least one of a PE field and a padding symbol that is located after the preemption field. Both the padding symbol and packet extension are used to help increase a processing time at the receive end. In other words, after transmitting the preemption indication frame to the receive end, the transmit end may continue to transmit content of the padding symbol and/or the PE field to the receive end, to increase the processing time at the receive end.

Optionally, the special OFDM symbol includes: an OFDM symbol on which only an even-numbered subcarrier has energy, an OFDM symbol on which only an odd-numbered subcarrier has energy, an OFDM symbol that is in a predefined mode and that is known to the receive end, an OFDM symbol that is the same as a previous OFDM symbol, or an OFDM symbol that has a plurality of repetitive waveforms.

For example, when the at least one special OFDM symbol includes an OFDM symbol on which only an even-numbered subcarrier has energy or an OFDM symbol on which only an odd-numbered subcarrier has energy, the receive end may determine, by identifying energy of each subcarrier, whether a preemption mechanism occurs. When the at least one special OFDM symbol includes an OFDM symbol that is in a predefined mode and that is known to the receive end, for example, the OFDM symbol that is in a predefined mode and that is known to the receive end may be an EHT-LTF symbol, the receive end may determine, by identifying whether the OFDM symbol in the predefined mode appears, whether a preemption mechanism occurs. When the at least one special OFDM symbol includes an OFDM symbol that is the same as a previous OFDM symbol, the receive end may determine, by identifying whether the current OFDM symbol is a duplicate symbol of the previous OFDM symbol, whether a preemption mechanism occurs. When the at least one special OFDM symbol includes an OFDM symbol with a plurality of repetitive waveforms, for example, the OFDM symbol with a plurality of repetitive waveforms may be an HT-STF symbol, a symbol length is 8 microseconds, and five repetition periods of 1.6 microseconds are included, the receive end may determine, by identifying whether the OFDM symbol with a plurality of repetitive waveforms appears, whether a preemption mechanism occurs.

In this embodiment of this application, the at least one special OFDM symbol located in the preemption field includes one or a combination of a plurality of the foregoing OFDM symbols, or may include a plurality of duplicate OFDM symbols of one of the foregoing OFDM symbols. This is not limited in this embodiment of this application.

Optionally, in the PPDU shown in FIG. 10 and the PPDU shown in FIG. 11, the preemption indication frame and the special OFDM symbol may be further used by the receive end to determine a transmission end location of the PPDU, so that the receive end quickly generates acknowledgment information for the PPDU.

According to the PPDU provided in this embodiment of this application, when a preemption mechanism occurs, a preemption indication frame or a special OFDM symbol is transmitted after a currently transmitted A-MPDU subframe. After receiving the preemption indication frame or the special OFDM symbol, a receive end may determine that the preemption mechanism occurs, and may also determine a transmission end location of a current PPDU. In comparison with a related technology, data transmission flexibility is improved.

In a process in which a transmit end transmits a PPDU, when the transmit end needs to transmit a data frame with a relatively high service priority, transmission of the current PPDU can be suspended, and the data frame with a relatively high service priority can be transmitted in time. Therefore, a transmission latency of the data frame with a relatively high service priority can be reduced.

According to the PPDU provided in this embodiment of this application, preemption indication information used to indicate whether the preemption mechanism occurs may be carried in each A-MPDU subframe. When the preemption mechanism occurs, the preemption indication information carried in the currently transmitted A-MPDU subframe indicates that the preemption mechanism occurs. In addition, the preemption indication frame and/or the special OFDM symbol are/is transmitted after the currently transmitted A-MPDU subframe. The preemption indication frame and/or the special OFDM symbol may be used by the receive end to determine the transmission end location of the PPDU, so that the receive end does not need to calculate a location of a preemption end symbol. This reduces an operation amount of the receive end, and reduces operation load of the receive end.

Optionally, in the PPDU shown in any one of FIG. 9 to FIG. 11, the preamble may carry preemption warning information, where the preemption warning information is used to indicate whether the preemption mechanism is likely to occur. In other words, the preemption warning information is used to indicate whether a currently transmitted PPDU includes a preemptable frame. In the PPDU shown in FIG. 10, the preemption warning information is further used to indicate whether the receive end needs to synchronously identify the preemption indication frame. In the PPDU shown in FIG. 11, the preemption warning information is further used to indicate whether the receive end needs to identify the special OFDM symbol.

Because the preamble in the PPDU is transmitted before the data field, the preemption warning information may be carried in the preamble, to indicate to the receive end whether the preemption mechanism is likely to occur in a process of transmitting the PPDU. When the preemption warning information indicates that the preemption mechanism is likely to occur, the receive end is ready to stop receiving the currently transmitted PPDU at any time. When the preemption warning information indicates that the preemption mechanism is not likely to occur, the receive end receives the currently transmitted PPDU according to an existing WLAN protocol.

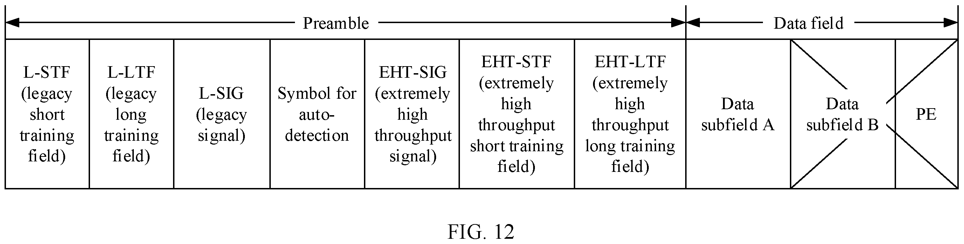

For example, FIG. 12 is a schematic structural diagram of a further PPDU according to an embodiment of this application. As shown in FIG. 12, a preamble of the PPDU includes a legacy short training field (legacy short training field, L-STF), a legacy long training field (legacy long training field, L-LTF), an L-SIG field, a symbol for auto-detection (symbol for auto-detection), an extremely high throughput signal (extremely high throughput, EHT-SIG) field, an extremely high throughput short training field (extremely high throughput short training field, EHT-STF), and an extremely high throughput long training field (extremely high throughput long training field, EHT-LTF). For content of the data field in the PPDU, refer to the PPDU shown in any one of FIG. 5 and FIG. 9 to FIG. 11. Details are not described herein again in this embodiment of this application. Optionally, the preemption warning information may be located in the EHT-SIG field of the preamble.

In conclusion, according to the data transmission method provided in the embodiments of this application, when a transmit end needs to stop transmitting a current PPDU, the transmit end may notify, by using preemption indication information, a receive end of suspension of transmitting the current PPDU. This improves data transmission flexibility. In a process in which the transmit end transmits a PPDU, when the transmit end needs to transmit a data frame with a relatively high service priority, transmission of the current PPDU can be suspended, and the data frame with a relatively high service priority can be transmitted in time. Therefore, a transmission latency of the data frame with a relatively high service priority can be reduced, reliability of a data transmission system can be improved, and a throughput of the data transmission system can be increased.

In a possible implementation, the preemption indication information used to indicate whether the preemption mechanism occurs is carried in each A-MPDU subframe, so that whether the preemption mechanism occurs can be indicated to the receive end explicitly. When the preemption mechanism occurs, the preemption indication information carried in the currently transmitted A-MPDU subframe indicates that the preemption mechanism occurs, and the currently transmitted A-MPDU subframe is a last A-MPDU subframe transmitted in the PPDU. After receiving the currently transmitted A-MPDU subframe, the receive end may determine that the preemption mechanism occurs. In addition, after receiving the currently transmitted A-MPDU subframe, the receive end may further calculate a location of a preemption end symbol, to determine a transmission end location of the current PPDU.

In another possible implementation, when the preemption mechanism occurs, the preemption indication frame or the special OFDM symbol is transmitted after the currently transmitted A-MPDU subframe. After receiving the preemption indication frame or the special OFDM symbol, the receive end may determine that the preemption mechanism occurs, and may also determine a transmission end location of the current PPDU.

Therefore, in the embodiments of this application, in a process in which a transmit end transmits a PPDU, when the transmit end needs to transmit a data frame with a relatively high service priority, transmission of the current PPDU can be suspended, and the data frame with a relatively high service priority can be transmitted in time. Therefore, a transmission latency of the data frame with a relatively high service priority can be reduced.

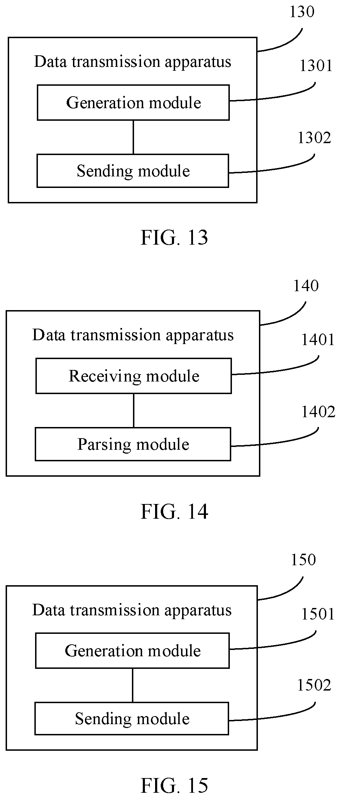

FIG. 13 is a schematic structural diagram of a data transmission apparatus according to an embodiment of this application. The data transmission apparatus may be used for the transmit end in FIG. 1. The data transmission apparatus 130 includes:

a generation module 1301, configured to generate preemption indication information, where the preemption indication information is used to indicate whether a preemption mechanism occurs; and
a sending module 1302, configured to send a PPDU, where the PPDU includes a preamble and a data field, and the data field carries the preemption indication information.

FIG. 14 is a schematic structural diagram of another data transmission apparatus according to an embodiment of this application. The data transmission apparatus may be used for the receive end in FIG. 1. The data transmission apparatus 140 includes:

a receiving module 1401, configured to receive a PPDU, where the PPDU includes a preamble and a data field, the data field carries preemption indication information, and the preemption indication information is used to indicate whether a preemption mechanism occurs; and
a parsing module 1402, configured to parse the PPDU based on the preemption indication information.

In the embodiments of this application, the data transmission apparatus shown in FIG. 13 is used as an example to describe the modules in the data transmission apparatus used for the transmit end, and the data transmission apparatus shown in FIG. 14 is used as an example to describe the modules in the data transmission apparatus used for the receive end. It should be understood that, in the embodiments of this application, the data transmission apparatus used for the transmit end has any function of the transmit end in the data transmission method shown in FIG. 6, and the data transmission apparatus used for the receive end has any function of the receive end in the data transmission method shown in FIG. 6.

FIG. 15 is a schematic structural diagram of a data transmission apparatus according to another embodiment of this application. The data transmission apparatus may be used for the transmit end in FIG. 1. The data transmission apparatus 150 includes:

a generation module 1501, configured to generate preemption indication information, where the preemption indication information is used to indicate that a preemption mechanism occurs; and
a sending module 1502, configured to send a PPDU, where the PPDU includes a preamble and a data field, and the data field carries the preemption indication information.

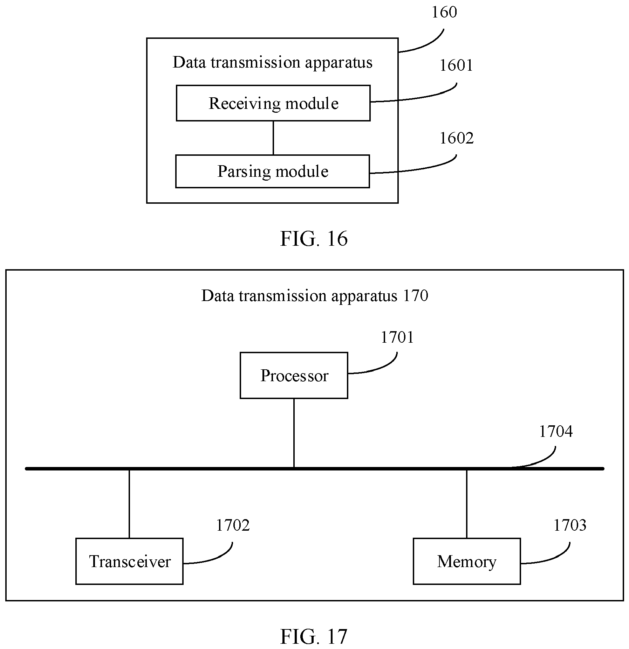

FIG. 16 is a schematic structural diagram of another data transmission apparatus according to another embodiment of this application. The data transmission apparatus may be used for the receive end in FIG. 1. The data transmission apparatus 160 includes:

a receiving module 1601, configured to receive a PPDU, where the PPDU includes a preamble and a data field, the data field carries preemption indication information, and the preemption indication information is used to indicate that a preemption mechanism occurs; and
a parsing module 1602, configured to parse the PPDU based on the preemption indication information.

In the embodiments of this application, the data transmission apparatus shown in FIG. 15 is used as an example to describe the modules in the data transmission apparatus used for the transmit end, and the data transmission apparatus shown in FIG. 16 is used as an example to describe the modules in the data transmission apparatus used for the receive end. It should be understood that, in the embodiments of this application, the data transmission apparatus used for the transmit end has any function of the transmit end in the data transmission method shown in FIG. 6, and the data transmission apparatus used for the receive end has any function of the receive end in the data transmission method shown in FIG. 6.

The data transmission apparatus (which is used for a transmit end or a receive end) provided in the embodiments of this application may be implemented in a plurality of product forms. For example, the data transmission apparatus may be configured as a general-purpose processing system. For example, the data transmission apparatus may be implemented by using a general bus architecture. For example, the data transmission apparatus may be implemented by using an application-specific integrated circuit (application specific integrated circuit, ASIC). The following provides several possible product forms of the data transmission apparatus in the embodiments of this application. It should be understood that the following is merely an example, and the possible product forms in the embodiments of this application are not limited thereto.

As a possible product form, a data transmission apparatus 170 may be a device (for example, a base station, UE, or an AP) configured to transmit data. As shown in FIG. 17, the data transmission apparatus 170 may include a processor 1701 and a transceiver 1702. Optionally, the data transmission apparatus may further include a memory 1703. The processor 1701, the transceiver 1702, and the memory 1703 communicate with each other through an internal connection. For example, the data transmission apparatus 170 may further include a bus 1704. The processor 1701, the transceiver 1702, and the memory 1703 communicate with each other through the bus 1704. The processor 1701 is configured to perform processing steps in the method performed by the data transmission apparatus in the method shown in FIG. 6. For example, when the data transmission apparatus is used for a transmit end, the processing step may be step 601 in FIG. 6. When the data transmission apparatus is used for a receive end, the processing steps may be step 603, step 605, and step 607 in FIG. 4. The transceiver 1702 receives control from the processor 1701, and is configured to perform steps of sending and receiving a PPDU in the method performed by the data transmission apparatus in the method shown in FIG. 6. For example, when the data transmission apparatus is used for a transmit end, the sending and receiving steps may be step 602, step 604, and step 606 in FIG. 6. When the data transmission apparatus is used for a receive end, the sending and receiving steps may be steps of receiving the PPDU by the receive end. The memory 1703 is configured to store instructions. The instructions are invoked by the processor 1701, to perform processing steps in the method performed by the data transmission apparatus in the method shown in FIG. 6.

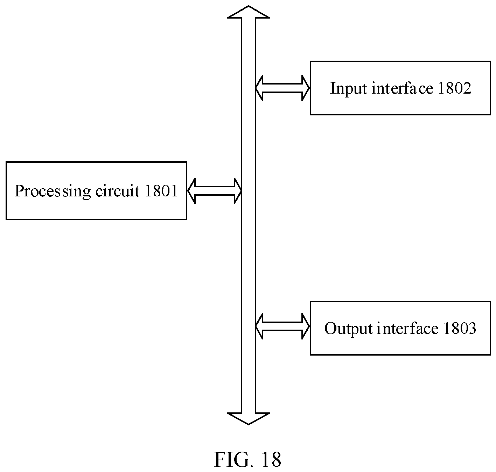

As another possible product form, the data transmission apparatus is alternatively implemented by a general-purpose processor, namely, a commonly known chip. As shown in FIG. 18, the data transmission apparatus may include a processing circuit 1801, an input interface 1802, and an output interface 1803. The processing circuit 1801, the input interface 1802, and the output interface 1803 communicate with each other through an internal connection. The input interface 1802 is configured to obtain information to be processed by the processing circuit 1801, the processing circuit 1801 is configured to perform a processing step (for example, step 601) performed by the transmit end in FIG. 6, to process the to-be-processed information, and the output interface 1803 is configured to output information processed by the processing circuit 1801. Alternatively, the input interface 1802 is configured to obtain information (the PPDU received by the receive end in the embodiment shown in FIG. 6) to be processed by the processing circuit 1801, the processing circuit 1801 is configured to perform processing steps (for example, step 603, step 605, and step 607) performed by the receive end in FIG. 6, to process the to-be-processed information, and the output interface 1803 is configured to output information processed by the processing circuit.

Optionally, the data transmission apparatus may further include a transceiver (which is not shown in FIG. 18). When the processing circuit 1801 is configured to perform the processing step performed by the transmit end in FIG. 6, to process the to-be-processed information, the output interface 1803 is configured to output the information processed by the processing circuit 1801 to the transceiver, and the transceiver is configured to send the information processed by the processing circuit 1801. When the processing circuit 1801 is configured to process the to-be-processed information by performing the processing steps performed by the receive end in FIG. 6, the transceiver is configured to: receive the information to be processed by the processing circuit 1801, and send the information to be processed by the processing circuit 1801 to the input interface 1802.

As still another possible product form, the data transmission apparatus may alternatively be implemented by using the following: a field programmable gate array (Field-Programmable Gate Array, FPGA), a programmable logic device (Programmable Logic Device, PLD), a controller, a state machine, gate logic, a discrete hardware component, any other suitable circuit, or any combination of circuits that can perform various functions described in this application.

All or a part of the foregoing embodiments may be implemented by using software, hardware, firmware, or any combination thereof. When software is used to implement the embodiments, the embodiments may be implemented all or partially in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk Solid State Disk), or the like.

The term "and/or" in this application describes only an association relationship for describing associated objects and indicates that three relationships may exist. For example, A and/or B may indicate the following three cases: Only A exists, both A and B exist, and only B exists. In addition, the symbol "/" in this specification generally indicates an "or" relationship between the associated objects.

The foregoing descriptions are merely optional embodiments of this application, but are not intended to limit this application. Any modification, equivalent replacement, or improvement made without departing from the spirit and principle of this application shall fall within the protection scope of this application.

**Claims**

1. A data transmission method, wherein the method is used for a transmit end, and the method comprises:

   generating preemption indication information, wherein the preemption indication information is used to indicate whether a preemption mechanism occurs; and
   sending a physical layer protocol data unitPPDU, wherein the PPDU comprises a preamble and a data field, and the data field carries the preemption indication information.

2. A data transmission method, wherein the method is used for a receive end, and the method comprises:

   receiving a PPDU, wherein the PPDU comprises a preamble and a data field, the data field carries preemption indication information, and the preemption indication information is used to indicate whether a preemption mechanism occurs; and
   parsing the PPDU based on the preemption indication information.

3. The method according to claim 2, wherein if the preemption indication information indicates that the preemption mechanism occurs, the parsing the PPDU based on the preemption indication information comprises:
   determining a location of a preemption end symbol in the PPDU based on the preemption indication information, wherein the preemption end symbol is used to indicate a transmission end location of the PPDU.

4. The method according to claim 3, wherein the preemption end symbol is a last orthogonal frequency division multiplexingOFDM symbol comprising a target A-MPDU subframe or a last OFDM symbol comprising a code block in which a target A-MPDU subframe is located, and the target A-MPDU subframe is a last A-MPDU subframe in the PPDU.

5. The method according to any one of claims 1 to 4, wherein the preamble comprises a legacy signal L-SIG field; and if the preemption mechanism occurs, actual transmission duration of the PPDU is less than originally-defined transmission duration indicated by the L-SIG field.

6. The method according to any one of claims 1 to 5, wherein the data field comprises at least one aggregate media access control protocol data unit A-MPDU subframe, and each A-MPDU subframe in the at least one A-MPDU subframe carries the preemption indication information.

7. The method according to claim 6, wherein if the preemption mechanism occurs, the preemption indication information carried in a last A-MPDU subframe in the at least one A-MPDU subframe indicates that the preemption mechanism occurs.

8. The method according to claim 6 or 7, wherein the A-MPDU subframe comprises an MPDU delimiter and an MPDU; the MPDU delimiter comprises at least one of the following fields: an end frame field, a reserved bit field, an MPDU length field, a cyclic redundancy code field, and a delimiter signature field; and the MPDU comprises at least one of the following fields: a frame header, a frame body, and a frame check sequence; and

the preemption indication information is located in at least one of the following fields: the end frame field, the reserved bit field, the MPDU length field, the cyclic redundancy code field, the delimiter signature field, a high throughput control field of the frame header, and the frame check sequence.

9. The method according to claim 8, wherein the preemption indication information is located in the reserved bit field; and

if the reserved bit field is a first value, it indicates that the preemption mechanism occurs; or
if the reserved bit field is a second value, it indicates that the preemption mechanism does not occur, wherein the second value is different from the first value.

10. The method according to claim 8, wherein the preemption indication information is located in the frame check sequence; and

if the frame check sequence comprises a first-type sequence, it indicates that the preemption mechanism occurs; or
if the frame check sequence comprises a second-type sequence, it indicates that the preemption mechanism does not occur, wherein the second-type sequence is different from the first-type sequence.

11. The method according to claim 10, wherein the first-type sequence is obtained by performing at least one of an exclusive OR operation and a flip operation on the second-type sequence.

12. The method according to claim 8, wherein the preemption indication information is located in the delimiter signature field; and

if the delimiter signature field comprises a first-type delimiter signature symbol, it indicates that the preemption mechanism occurs; or
if the delimiter signature field comprises a second-type delimiter signature symbol, it indicates that the preemption mechanism does not occur, wherein the second-type delimiter signature symbol is different from the first-type delimiter signature symbol.

13. The method according to any one of claims 1 to 12, wherein the preamble carries preemption warning information, and the preemption warning information is used to indicate whether the preemption mechanism is likely to occur.

14. The method according to claim 13, wherein the preemption warning information is located in an extremely high throughput signal EHT-SIG field of the preamble.

15. A data transmission apparatus, wherein the apparatus is used for a transmit end, and the apparatus comprises:

a generation module, configured to generate preemption indication information, wherein the preemption indication information is used to indicate whether a preemption mechanism occurs; and
a sending module, configured to send a physical layer protocol data unit PPDU, wherein the PPDU comprises a preamble and a data field, and the data field carries the preemption indication information.

16. A data transmission apparatus, wherein the apparatus is used for a receive end, and the apparatus comprises:

a receiving module, configured to receive a PPDU, wherein the PPDU comprises a preamble and a data field, the data field carries preemption indication information, and the preemption indication information is used to indicate whether a preemption mechanism occurs; and
a parsing module, configured to parse the PPDU based on the preemption indication information.

17. The apparatus according to claim 16, wherein if the preemption indication information indicates that the preemption mechanism occurs, the parsing module is configured to:
determine a location of a preemption end symbol in the PPDU based on the preemption indication information, wherein the preemption end symbol is used to indicate a transmission end location of the PPDU.

18. The apparatus according to claim 17, wherein the preemption end symbol is a last orthogonal frequency division multiplexing OFDM symbol comprising a target A-MPDU subframe or a last OFDM symbol comprising a code block in which a target A-MPDU subframe is located, and the target A-MPDU subframe is a last A-MPDU subframe in the PPDU.

19. The apparatus according to any one of claims 15 to 18, wherein the preamble comprises a legacy signal L-SIG field; and

    if the preemption mechanism occurs, actual transmission duration of the PPDU is less than originally-defined transmission duration indicated by the L-SIG field.

20. The apparatus according to any one of claims 15 to 19, wherein the data field comprises at least one aggregate media access control protocol data unit A-MPDU subframe, and each A-MPDU subframe in the at least one A-MPDU subframe carries the preemption indication information.

21. The apparatus according to claim 20, wherein if the preemption mechanism occurs, the preemption indication information carried in a last A-MPDU subframe in the at least one A-MPDU subframe indicates that the preemption mechanism occurs.

22. The apparatus according to claim 20 or 21, wherein the A-MPDU subframe comprises an MPDU delimiter and an MPDU; the MPDU delimiter comprises at least one of the following fields: an end frame field, a reserved bit field, an MPDU length field, a cyclic redundancy code field, and a delimiter signature field; and the MPDU comprises at least one of the following fields: a frame header, a frame body, and a frame check sequence; and
    the preemption indication information is located in at least one of the following fields: the end frame field, the reserved bit field, the MPDU length field, the cyclic redundancy code field, the delimiter signature field, a high throughput control field of the frame header, and the frame check sequence.

23. The apparatus according to claim 22, wherein the preemption indication information is located in the reserved bit field; and

    if the reserved bit field is a first value, it indicates that the preemption mechanism occurs; or
    if the reserved bit field is a second value, it indicates that the preemption mechanism does not occur, wherein the second value is different from the first value.

24. The apparatus according to claim 22, wherein the preemption indication information is located in the frame check sequence; and

    if the frame check sequence comprises a first-type sequence, it indicates that the preemption mechanism occurs; or
    if the frame check sequence comprises a second-type sequence, it indicates that the preemption mechanism does not occur, wherein the second-type sequence is different from the first-type sequence.

25. The apparatus according to claim 24, wherein the first-type sequence is obtained by performing at least one of an exclusive OR operation and a flip operation on the second-type sequence.

26. The apparatus according to claim 22, wherein the preemption indication information is located in the delimiter signature field; and

    if the delimiter signature field comprises a first-type delimiter signature symbol, it indicates that the preemption mechanism occurs; or
    if the delimiter signature field comprises a second-type delimiter signature symbol, it indicates that the preemption mechanism does not occur, wherein the second-type delimiter signature symbol is different from the first-type delimiter signature symbol.

27. The apparatus according to any one of claims 15 to 26, wherein the preamble carries preemption warning information, and the preemption warning information is used to indicate whether the preemption mechanism is likely to occur.

28. The apparatus according to claim 27, wherein the preemption warning information is located in an extremely high throughput signal EHT-SIG field of the preamble.

29. A data transmission apparatus, comprising a memory and a processor, wherein the memory is coupled to the processor, the memory is configured to store program instructions, and the processor is configured to invoke the program instructions, so that the apparatus implements the method according to any one of claims 1 to 14.

30. A computer-readable storage medium, wherein the computer-readable storage medium stores a computer program, and the computer program comprises instructions for implementing the method according to any one of claims 1 to 14.

31. An apparatus, wherein the apparatus is configured to implement the method according to any one of claims 1 to 14.

FIG. 1

| Frame control | Duration/Identifier | Address 1 | Address 2 | Address 3 | Sequence control | Address 4 | Service quality control | High throughput control | Frame body | FCS (frame check sequence) |
|---|---|---|---|---|---|---|---|---|---|---|

|←———————————————————————————— Frame header ————————————————————————————→|

FIG. 2

n A-MPDU subframes

| A-MPDU subframe 1 | A-MPDU subframe 2 | ... | A-MPDU subframe n | End of frame padding |
|---|---|---|---|---|

| MPDU delimiter | MPDU | Padding |
|---|---|---|

FIG. 3

| EOF (end of frame) | Reserved bit | MPDU length | CRC (cyclic redundancy code) | Delimiter signature |
|---|---|---|---|---|

FIG. 4

Data field

| Preamble | Data subfield A | Data subfield B | PE (packet extension) |
|---|---|---|---|

m A-MPDU subframes    (n–m) A-MPDU subframes

n A-MPDU subframes

FIG. 5

```
┌─────────────┐        ┌─────────────┐        ┌─────────────┐
│ Transmit end│        │First receive│        │   Second    │
│             │        │     end     │        │ receive end │
└─────────────┘        └─────────────┘        └─────────────┘
```

601: Generate preemption indication information

602: Send a PPDU including a preemptable frame

603: After receiving the PPDU, parse the PPDU based on the preemption indication information

604: Send a PPDU including an express frame

605: After receiving the PPDU including the express frame, parse the PPDU including the express frame

606: Send a PPDU including an A-MPDU subframe that is not sent and that is in the preemptable frame

607: After receiving the PPDU including the A-MPDU subframe that is not sent and that is in the preemptable frame, parse the PPDU including the A-MPDU subframe that is not sent and that is in the preemptable frame

FIG. 6

| Transmit end | First fragment of a preemptable frame | Second fragment of the preemptable frame | Third fragment of the preemptable frame |
| --- | --- | --- | --- |
| Preemptable queue | | | |
| | | OFDMA/MU-MIMO | |
| Express queue | A preemption mechanism occurs | Express frame | |

FIG. 7

| Transmit end | First fragment of a preemptable frame | | Second fragment and third fragment of the preemptable frame |
| --- | --- | --- | --- |
| Preemptable queue | | | |
| Express queue | A preemption mechanism occurs | Express frame | |

FIG. 8

n A-MPDU subframes

| Preamble | Data subfield A | Data subfield B | PE (packet extension) |
|---|---|---|---|

| A-MPDU subframe 1 | ... | A-MPDU subframe m | Padding symbol | PE (packet extension) |
|---|---|---|---|---|

m A-MPDU subframes

FIG. 9

n A-MPDU subframes

| Preamble | Data subfield A | Data subfield B | PE (packet extension) |
|---|---|---|---|

| A-MPDU subframe 1 | ... | A-MPDU subframe m | Preemption indication frame | Padding symbol | PE (packet extension) |
|---|---|---|---|---|---|

m A-MPDU subframes

FIG. 10

EP 3 937 408 A1

n A-MPDU subframes

| Preamble | Data subfield A | Data subfield B | PE (packet extension) |

| A-MPDU subframe 1 | ... | A-MPDU subframe m | At least one special OFDM symbol | Padding symbol | PE (packet extension) |

Preemption field

m A-MPDU subframes

FIG. 11

| L-STF (legacy short training field) | L-LTF (legacy long training field) | L-SIG (legacy signal) | Symbol for auto-detection | EHT-SIG (extremely high throughput signal) | EHT-STF (extremely high throughput short training field) | EHT-LTF (extremely high throughput long training field) | Data subfield A | Data subfield B | PE |

|←——————————————————— Preamble ———————————————————→|←————— Data field —————→|

FIG. 12

EP 3 937 408 A1

130

Data transmission apparatus

1301

Generation module

1302

Sending module

FIG. 13

140

Data transmission apparatus

1401

Receiving module

1402

Parsing module

FIG. 14

150

Data transmission apparatus

1501

Generation module

1502

Sending module

FIG. 15

FIG. 16

FIG. 17

Input interface 1802

Processing circuit 1801

Output interface 1803

FIG. 18

## INTERNATIONAL SEARCH REPORT

International application No.

**PCT/CN2020/077830**

| | |
|---|---|
| **A.**   **CLASSIFICATION OF SUBJECT MATTER** | |

H04L 5/00(2006.01)i；  H04W 72/04(2009.01)i

According to International Patent Classification (IPC) or to both national classification and IPC

| | |
|---|---|
| **B.**     **FIELDS SEARCHED** | |

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP: 占先, 优先, 指示, 物理层协议数据单元, 前导码, 数据字段, 中止, 传输机会, prior+, indicat+, PPDU, MPDU, A-MPDU, preamble, data field, suspend, TXOP

| | |
|---|---|
| **C.**     **DOCUMENTS CONSIDERED TO BE RELEVANT** | |

| Category* | Citation of document, with indication, where appropriate, of the relevant passages | Relevant to claim No. |
|---|---|---|
| PX | CN 110381601 A (TENCENT TECHNOLOGY SHENZHEN CO., LTD.) 25 October 2019 (2019-10-25) <br> description, paragraphs [0054]-[0169] | 1-31 |
| Y | CN 102948101 A (QUALCOMM INC.) 27 February 2013 (2013-02-27) <br> description, paragraphs [0118]-[0188] | 1-31 |
| Y | CN 107889257 A (HUAWEI TECHNOLOGIES CO., LTD.) 06 April 2018 (2018-04-06) <br> description, paragraphs [0086]-[0088] | 1-31 |
| A | US 2011222490 A1 (BROADCOM CORP.) 15 September 2011 (2011-09-15) <br> entire document | 1-31 |

☐ Further documents are listed in the continuation of Box C.      ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **25 April 2020** | **28 May 2020** |

| Name and mailing address of the ISA/CN | Authorized officer |
|---|---|
| **China National Intellectual Property Administration (ISA/ CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

International application No.

**PCT/CN2020/077830**

| Patent document cited in search report | | | Publication date (day/month/year) | Patent family member(s) | | | Publication date (day/month/year) |
|---|---|---|---|---|---|---|---|
| CN | 110381601 | A | 25 October 2019 | None | | | |
| CN | 102948101 | A | 27 February 2013 | US | 2011305176 | A1 | 15 December 2011 |
| | | | | EP | 2583401 | B1 | 26 September 2018 |
| | | | | KR | 101685073 | B1 | 09 December 2016 |
| | | | | JP | 6092178 | B2 | 08 March 2017 |
| | | | | JP | 2013536599 | A | 19 September 2013 |
| | | | | JP | 2015097389 | A | 21 May 2015 |
| | | | | US | 9337961 | B2 | 10 May 2016 |
| | | | | CN | 102948101 | B | 31 August 2016 |
| | | | | EP | 2583401 | A1 | 24 April 2013 |
| | | | | JP | 5680748 | B2 | 04 March 2015 |
| | | | | KR | 20130021442 | A | 05 March 2013 |
| | | | | KR | 101509127 | B1 | 07 April 2015 |
| | | | | KR | 20140103359 | A | 26 August 2014 |
| | | | | WO | 2011159831 | A1 | 22 December 2011 |
| CN | 107889257 | A | 06 April 2018 | EP | 3499940 | A1 | 19 June 2019 |
| | | | | EP | 3499940 | A4 | 31 July 2019 |
| | | | | WO | 2018059490 | A1 | 05 April 2018 |
| | | | | US | 2019215851 | A1 | 11 July 2019 |
| US | 2011222490 | A1 | 15 September 2011 | US | 9204337 | B2 | 01 December 2015 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910198301